# FASCICULE DE BREVET EUROPEEN

(11) **EP 4 185 845 B1**
(45) Date de publication et mention de la délivrance du brevet: **25.06.2025**
(21) Numéro de dépôt: 21755803.0
(22) Date de dépôt: 23.07.2021
(51) Int. Cl.: G01H 1/12, B61L 23/04, G01H 9/00, G01N 29/14, G01N 29/50, G01V 1/36, G01N 29/04, G01N 29/26, G01N 29/44

(54) **SURVEILLANCE DE L'ETAT PHYSIQUE D'UN RAIL**
VERFAHREN ZUR ÜBERWACHUNG DES PHYSIKALISCHEN ZUSTANDS EINER SCHIENE
METHOD FOR MONITORING THE PHYSICAL STATE OF A RAIL

(30) Priorité: 24.07.2020 FR 2007822; 02.10.2020 FR 2010104
(43) Date de publication de la demande: 31.05.2023
(73) Titulaire: SERCEL, 44470 Carquefou (FR)
(72) Inventeur: BARDAINNE, Thomas, 91300 MASSY (FR)
(74) Mandataire: Ipsilon
(86) Numéro de dépôt international: PCT/FR2021/051381
(87) Numéro de publication internationale: WO 2022/018388

(56) Documents cités:
- WO-A1-2020/025390
- US-A1- 2019 232 988
- US-A1- 2019 346 408
- SABRA KARIM ET AL, THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 121, no. 4, 8 May 2007 (2007-05-08), pages 1987 - 1995, XP012096520, ISSN: 0001-4966, DOI: 10.1121/1.2710463

## Description

La présente invention concerne un procédé de surveillance de l'état physique d'un élément longitudinal et un système de surveillance pour la mise en œuvre de ce procédé.

De nombreux systèmes ou structures, tels que les constructions, les ponts, les ascenseurs ou les réseaux ferroviaires, comprennent des éléments longitudinaux, notamment métalliques, comme des câbles, des rails, des barrières ou des éléments de structure. Ces éléments longitudinaux servent souvent de support ou de soutien à des éléments du système et il est donc important de connaître l'état physique de ces éléments longitudinaux, notamment leur état d'usure, ou la variation de cet état physique au cours du temps.

Les variations d'état physique de ces éléments longitudinaux peuvent être dues à leur utilisation en elle-même mais aussi à leur exposition à des conditions climatiques variables (ensoleillement, pluie, gel..) ou au milieu ambiant dans lesquels ils sont installés, par exemple dans le cas d'éléments longitudinaux immergés.

Les rails de chemin de fer, par exemple, s'usent au fil du temps, d'une part, par le passage répété des trains et, d'autre part, par leur exposition à des conditions climatiques pouvant être extrêmes. Afin d'éviter que les rails ne se cassent ou ne se fissurent lors du passage d'un train, il est important de surveiller leur état d'usure.

Dans l'art antérieur, des méthodes existent pour effectuer la surveillance des rails. Une des méthodes actuellement utilisée est le contrôle visuel des rails. Une autre méthode possible pour une telle surveillance dans le document EP3509927 se base sur la sismique dite « passive », consistant à placer des capteurs d'ondes sismiques ou d'autres ondes mécaniques à proximité des rails pour identifier les variations sur les signaux propagés par le sol et qui ont été générés par les ondes mécaniques liées au contact entre les roues du train et le rail lors du passage du train.

Cependant, ces méthodes permettent uniquement de détecter une détérioration importante du rail comme une fissure, voire une rupture.

Il serait donc intéressant de disposer d'une solution permettant d'effectuer une surveillance de l'état physique de tout type d'élément longitudinal, notamment en vue d'étudier la variation de l'état physique de cet élément longitudinal au cours du temps et en fonction des conditions auxquelles cet élément longitudinal est ou a été soumis, et de détecter une usure de cet élément longitudinal à un stade précoce.

Le document WO 2020/025390 présente ainsi des pistes pour étudier l'état de rails de chemin de fer par l'intermédiaire d'ondes guidées dans le rail. Il est proposé d'instrumenter le rail et le signal réponse aux ondes guidées reçu par les capteurs, suite notamment au passage d'un train, est traité pour visualiser une caractéristique de l'état du rail par comparaisons avec des valeurs issues de modèles théoriques ou empiriques.

Un premier objet de l'invention est un procédé de surveillance de l'état physique d'un rail ou autre élément longitudinal le procédé comprenant :
- une étape de détection des ondes mécaniques se déplaçant le long de l'élément longitudinal au moyen d'un réseau de capteurs d'ondes mécaniques placés le long et au contact de l'élément longitudinal, ledit réseau comprenant au moins une première paire de capteurs positionnés chacun à une extrémité d'une première portion de l'élément longitudinal, et
- une étape de traitement comprenant
   - la détermination d'une pluralité de traces simplifiées, chaque trace simplifiée résultant de l'interférométrie de signaux délivrés par les capteurs de la première paire sur une période temporelle prédéterminée,
   - la détermination d'au moins une première et une deuxième traces virtuelles, la première trace virtuelle correspondant à la somme de traces simplifiées déterminées pendant un premier intervalle de surveillance et la deuxième trace virtuelle correspondant à la somme de traces simplifiées déterminées pendant un deuxième intervalle de surveillance, le premier et le deuxième intervalles de surveillance étant différents et comprenant chacun une pluralité de période temporelles prédéterminées, et
   - la comparaison d'au moins la première trace virtuelle avec la deuxième trace virtuelle de manière à extraire au moins une information sur l'état physique de la première portion.

Le procédé de surveillance de l'invention permet de surveiller un élément longitudinal, et notamment un rail de voie de chemin de fer, grâce aux ondes mécaniques se déplaçant le long de ce dernier, et en particulier grâce aux trains empruntant ledit rail. Les capteurs étant placés le long et au contact de l'élément longitudinal, ils détectent les ondes mécaniques directement, et ce, sans qu'elles soient passées par un autre matériau ou milieu comme le sol. Le signal reçu par les capteurs subit un traitement d'interférométrie, et le signal interféré (ou trace simplifiée) obtenu est donc uniquement représentatif de l'élément longitudinal et contient peu de, voire aucun, signaux parasites, à la différence de solutions connues dans lesquelles des capteurs sont placés à distance de l'élément longitudinal et des ondes sont transmises par l'intermédiaires du sol.

En particulier, dans le cas d'un train circulant sur une voie de chemin de de fer et lorsque ledit train est à une distance donnée d'un point du rail (500 m par exemple), il génère des ondes qui se propagent dans le guide d'onde que constitue le rail. Ce signal, très fort, est caractérisé par une propagation entièrement située dans le rail et donc sujet à porter les informations d'imperfections. L'interférométrie entre les signaux captés par deux capteurs placés sur le rail pendant une période précédant le passage du train (par exemple 30 secondes à une minutes avant), permet d'extraire la composante de propagation du signal, en s'affranchissant de la composante due à la source ; ceci permet de mesurer des indicateurs identifiés comme la vitesse de propagation par exemple. Ensuite, l'analyse des variations temporelles et spatiales de ces indicateurs permet l'identification d'une portion usagée du rail.

Par ailleurs, il est possible d'étudier des portions de n'importe quelle longueur selon l'endroit où les capteurs sont placés.

Dans l'invention, les signaux interférés sont issus de l'application d'une technique d'interférométrie sur les signaux d'une paire de capteurs, en particulier sur un couple de signaux, l'un des signaux de ce couple provenant du premier capteur d'une paire et l'autre signal de ce couple provenant du deuxième capteur de la même paire. La technique d'interférométrie appliquée peut être par exemple de l'intercorrélation (parfois appelée corrélation), de la convolution, de la déconvolution et/ou tout autre méthode d'interférométrie. L'application d'une technique d'interférométrie permet avantageusement d'obtenir des signaux utilisables car cette technique permet de s'affranchir de la signature du signal émis/détecté et d'extraire la composante de propagation dudit signal.

Selon le procédé de l'invention, les signaux mesurés à chaque occurrence d'onde guidée peuvent être cumulés sur des périodes successives, et la comparaison peut être réalisée pour chacune des périodes. En particulier, pour un rail de chemin de fer, les traces simplifiées générées par un passage de train sont cumulées pour une journée, et l'évolution est évaluée par comparaisons entre journées. Cette sommation de signaux permet d'alléger le traitement mathématique et/ou d'utiliser des capteurs plus robustes ou moins précis, notamment la technologie DAS sur fibre optique. L'analyse journalière ou hebdomadaire, voire mensuelle, des modifications facilite par ailleurs un usage « industriel » de l'invention.

Un deuxième objet de l'invention est un système de surveillance de l'état physique d'un rail ou autre élément longitudinal, le système comprenant :
- un réseau de capteurs d'ondes mécaniques placés le long et au contact de l'élément longitudinal, ledit réseau comprenant au moins une première paire de capteurs positionnés chacun à une extrémité d'une première portion de l'élément longitudinal, et
- un système de traitement des signaux issus des capteurs dudit réseau de capteurs, le système de traitement étant configuré pour
   - déterminer une pluralité de traces simplifiées en faisant l'interférométrie de signaux délivrés par les capteurs de la première paire de capteurs sur une période temporelle prédéterminée,
   - calculer au moins une première et une deuxième traces virtuelles, la première trace virtuelle correspondant à la somme de traces simplifiées déterminées pendant un premier intervalle de surveillance et la deuxième trace virtuelle correspondant à la somme de traces simplifiées déterminées pendant un deuxième intervalle de surveillance, le premier et le deuxième intervalles de surveillance étant différents et comprenant chacun une pluralité de période temporelles prédéterminées, et
   - comparer au moins la première et la deuxième traces virtuelles de manière à extraire au moins une information sur l'état physique de la première portion.

### Brève description des dessins

Les dessins annexés illustrent l'invention :
- Les figures 1a et 1b représentent un système de surveillance de l'état physique d'un rail selon deux modes de réalisation de l'invention ;
- La figure 2a représente un organigramme illustrant un premier procédé de surveillance selon l'invention ;
- La figure 2b représente un premier exemple de signal obtenu par le procédé de la figure 2a ;
- La figure 2c représente un deuxième exemple de signal obtenu par le procédé de la figure 2a ;
- La figure 3a représente un organigramme illustrant un procédé de surveillance selon un deuxième mode de réalisation de l'invention ;
- La figure 3b représente un exemple de signaux obtenus dans le cadre du procédé de la figure 3a ;
- La figure 3c représente un exemple d'application du deuxième procédé de surveillance de l'invention ;
- La figure 4a représente un organigramme illustrant un procédé de surveillance selon un troisième mode de réalisation de l'invention ;
- La figure 4b représente un exemple de signaux obtenus dans le cadre du procédé de la figure 4a ;
- La figure 4c représente un exemple de signaux obtenus dans le cadre du procédé de la figure 4a ; et
- La figure 5 représente une méthode de surveillance additionnelle pouvant être réalisée en utilisant au moins une partie du système de la figure 1.

### Description de mode(s) de réalisation

Pour des raisons de clarté, seuls les éléments essentiels pour la compréhension de l'invention ont été représentés de manière schématique et ceci, sans respect de l'échelle.

De même, afin d'alléger la description, l'application préférentielle de l'invention est décrite, en relation avec un rail de chemin de fer instrumenté pour détecter les ondes quidées générées par le passage des trains. Cependant, il s'agit d'un exemple de réalisation non limitatif et l'invention peut s'appliquer à tout type d'élément longitudinal permettant une propagation d'ondes mécaniques, notamment sismique ou vibratoire et dont on souhaite surveiller la variation d'état physique. Dans la présente invention, les ondes mécaniques sont générées de façon active par un événement volontaire qui a lieu sur l'élément longitudinal comme par exemple un choc ou un frottement, ce qui est différent des systèmes qui réalisent une surveillance passive en utilisant les ondes du bruit ambiant.

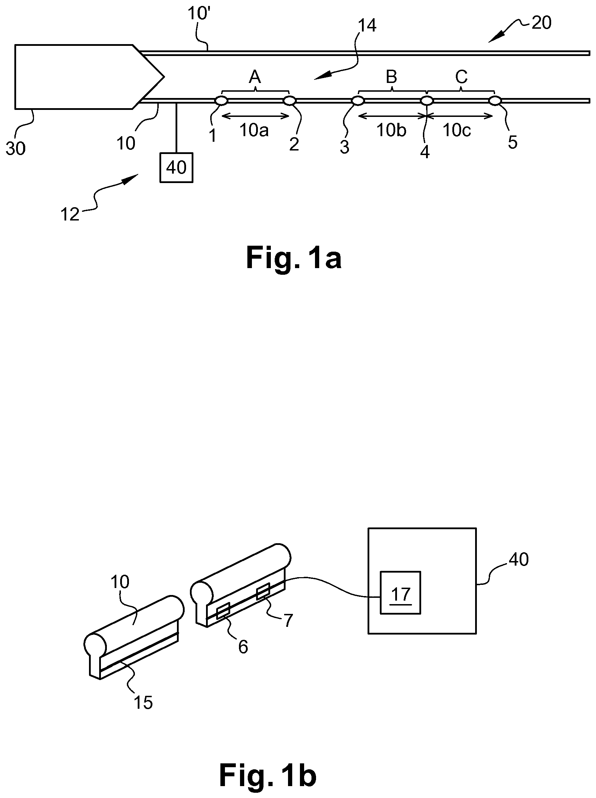

Les procédés de surveillance de l'état physique d'un élément longitudinal selon l'invention et les systèmes permettant de mettre en œuvre ces procédés vont ainsi être décrits dans le cas où l'élément longitudinal à surveiller est un rail de voie ferrée, par exemple, le premier rail 10 représenté sur la figure 1a, formant avec un deuxième rail 10' une voie ferrée 20 sur laquelle peut se déplacer un train 30.

Le rail 10 peut être linéaire ou courbé, la courbure pouvant être selon une première et/ou selon une deuxième direction, la première direction étant horizontale et perpendiculaire à l'axe longitudinal du rail 10 et la deuxième direction étant verticale et perpendiculaire à l'axe longitudinal du rail 10.

Pour permettre la surveillance de l'état d'au moins une première portion 10a du rail 10, un système 12 de surveillance de l'état physique du rail 10 selon l'invention comprend :
- un réseau 14 de capteurs d'ondes mécaniques placés le long et au contact du rail 10, le réseau 14 comprenant au moins une première paire A de capteurs 1 et 2 positionnés à chacune des extrémités de la première portion 10a du rail 10, et
- un système 40 de traitement des signaux issus des capteurs dudit réseau 14 de capteurs.

Dans l'exemple illustré sur la figure 1a, le réseau 14 comprend en outre une deuxième paire B de capteurs formée par un troisième capteur 3 et un quatrième capteur 4 chacun placés à une extrémité d'une deuxième portion 10b du rail 10, et une troisième paire C de capteurs formée par le quatrième capteur 4 et un cinquième capteur 5 placés chacun à une extrémité d'une troisième portion 10c du rail 10.

Dans l'exemple illustré, les capteurs du réseau 14 sont intégrés dans des récepteurs discrets placés de façon régulière et espacés d'une distance constante, par exemple une distance pouvant aller de un mètre à quelques dizaines de mètres. Cette répartition régulière est avantageusement choisie sur toute la longueur du rail qui est soumise aux mêmes conditions d'usure. En variante non représentée, les capteurs, ou les récepteurs comprenant les capteurs, peuvent être répartis de façon irrégulière, sur tout ou partie du rail. Une répartition différente des capteurs, au moins sur certaines longueurs du rail peut être intéressante pour prendre en compte le fait que certaines parties du rail sont susceptibles d'être soumises à des conditions d'usure plus importantes comme par exemple les zones de virage.

Dans la présente invention, un récepteur discret comprend un capteur ainsi qu'une unité de transmission/enregistrement, et permet de mesurer et enregistrer les ondes mécaniques puis de transmettre les données enregistrées vers le système 40 de traitement.

Chacun des capteurs du réseau 14 de capteurs peut-être choisi parmi les capteurs de technologie éprouvée de type géophone, accéléromètre et/ou autre capteur d'ondes mécaniques. Dans un mode de réalisation préféré, tous les capteurs du réseau 14 de capteurs peuvent être identiques de sorte à simplifier les traitements et la maintenance. Selon un autre exemple de réalisation possible, les capteurs du réseau 14 de capteurs peuvent être un mélange de capteurs différents. Les capteurs peuvent être choisis par exemple en fonction de leur robustesse, leur taille, la facilité de déploiement et la fiabilité requise : ainsi par exemple, un réseau de microcapteurs (connus sous l'anglicisme Micro-Electro-Mechanical Systems ou MEMS) identiques peut être préféré.

Dans un autre mode de réalisation illustré sur la figure 1b, le réseau 14 de capteurs est réalisé au moins partiellement par une fibre optique 15 solidarisée au rail et associée à un dispositif de détection acoustique distribuée (DAS) 17 qui est intégré au système 40 de traitement. La technologie DAS qui est connue de l'homme du métier permet d'utiliser la fibre optique comme un ensemble de capteurs équivalents qui seraient positionnés à des intervalles prédéfinis le long du parcours de la fibre.

L'avantage de la technologie DAS est que la fibre optique 15 peut s'étendre sur plusieurs dizaines, voire centaines de kilomètres le long du rail 10 ou de tout autre élément longitudinal et présente un faible coût. Par ailleurs, la position de chacun des capteurs équivalents le long de la fibre optique n'est pas figée dans le temps et peut être choisie en fonction de la surveillance que l'on souhaite réaliser. En effet, la détection des ondes mécaniques le long du rail se fait sur toute la longueur de la fibre optique, et c'est lors de l'étape de traitement que l'on décide de la position de chacun des capteurs équivalents en fonction de la ou des portions sur lesquelles on souhaite réaliser la surveillance. La technologie DAS associée à l'utilisation de la fibre optique offre ainsi une grande souplesse d'utilisation. Comme pour les modes de réalisation utilisant des capteurs discrets, le dispositif DAS peut être configuré pour que les capteurs équivalents soient positionnés de façon régulière, irrégulière, ou de façon régulière ou irrégulière en alternance.

Toute combinaison de capteurs peut être utilisée. Il est possible par exemple de placer une fibre optique 15 le long du rail 10 sur une première partie du rail et de placer des capteurs discrets sur une deuxième partie du rail. Il est également possible de placer une fibre optique sur toute la longueur du rail ou sur une partie de la longueur du rail 10 et de positionner des capteurs discrets 6,7 même dans certaines zones de la partie couverte par la fibre optique.

Selon un mode de réalisation illustré ci-après, les deux capteurs d'une même paire de capteurs sont deux accéléromètres identiques.

Les capteurs 1 à 5 sont couplés mécaniquement au rail 10, de préférence par contact direct. Ainsi, ils peuvent détecter directement des ondes mécaniques, sismiques ou vibratoires, se déplaçant le long du rail. Les ondes mécaniques qui vont pouvoir être détectées sont par exemple générées par une source qui est, dans ce mode de réalisation, le train 30 lorsqu'il se déplace sur la voie ferrée 20.

Chacun des capteurs du réseau 14 est relié à un système de traitement des signaux détectés. Dans le mode de réalisation illustré, le système de traitement est représenté par un système 40 de traitement relié (de façon filaire ou sans fil) à chacun des capteurs du réseau 14 qui reçoit en conséquence les signaux détectés par chacun des capteurs du réseau. Le système 40 de traitement peut comporter une unité centrale physique, ou être implémentée par l'intermédiaire d'internet (connu sous l'anglicisme « Cloud Computing »). Le système 40 de traitement peut comprendre également des éléments de traitement embarqués directement sur les capteurs du réseau 14. De fait, le système 40 de traitement peut prendre toute configuration mixte, avec du traitement embarqué, du « cloud computing » et/ou une unité centrale, permettant de réaliser le traitement du signal intégré à l'invention. Lorsque le système utilise la technologie DAS associée à une fibre optique 15 comme représenté sur la figure 1b, le système 40 de traitement est associé au dispositif 17 de détection acoustique distribuée.

Chaque capteur détecte les ondes mécaniques sur une durée prédéterminée et le signal correspondant est transmis vers le système 40 de traitement. La détection peut être programmée et être effectuée, par exemple pour une durée de 60s allant de 90 secondes à 30 secondes avant le passage des trains au niveau de la paire de capteurs. Alternativement et selon les moyens de traitement et la nature des capteurs, la détection peut être continue (avec ou sans échantillonnage) et la fraction de signal « intéressante » pour la suite de la méthode selon l'invention est retenue dans le système 40 de traitement. Le système 40 de traitement comprend des moyens pour effectuer une étape d'interférométrie des signaux reçus sur une période temporelle prédéterminée ; par exemple, l'interférométrie est réalisée sur une portion de signal d'une durée d'environ une minute peu avant le passage du train, ceci pour profiter d'un signal fort et utile sans saturer les capteurs, puis seule une à quelques secondes de signal corrélé peuvent être retenues pour ce passage de train et ce, pour chaque couple de capteurs.

Le système 12 permet de mettre en œuvre trois procédés de surveillance de l'état physique du rail 10, ces trois procédés ayant en commun :
- une étape de détection des ondes mécaniques se déplaçant le long du rail 10 au moyen du réseau 14 de capteurs d'ondes mécaniques placés le long et au contact du rail 10, ledit réseau 14 comprenant au moins la première paire A de capteurs 1 et 2 positionnés chacun à une extrémité de la première portion 10a du rail 10, et
- une étape de traitement des signaux issus des capteurs 1 et 2 dudit réseau 14 de capteurs, ladite étape de traitement comportant la détermination d'au moins un premier signal interféré résultant de l'application d'une technique d'interférométrie, par exemple d'une intercorrélation, à des signaux délivrés par les capteurs 1 et 2 de la première paire A de capteurs sur une première période temporelle P1 prédéterminée.

L'application d'une méthode d'interférométrie permet d'obtenir des signaux utilisables, s'affranchissant de la signature de la source (i.e. du train) ; en particulier, on obtient des signaux interférés (ou traces simplifiées) en appliquant l'interférométrie à deux signaux d'une paire de capteurs.

Pour construire ces traces simplifiées (ou signaux interférés), on peut pratiquer de l'intercorrélation (parfois appelé corrélation), de la convolution, de la déconvolution et/ou tout autre méthode d'interférométrie. Dans les exemples de réalisation qui vont être décrits, la technique d'interférométrie utilisée est l'intercorrélation (ou corrélation).

Le premier et le deuxième capteurs détectent chacun un ensemble d'ondes mécaniques se déplaçant le long du rail 10, lesdites ondes étant générées par un train ou tout autre motrice se déplaçant sur le rail au moins durant la première période temporelle P1. Chacun des capteurs 1 et 2 de la première paire A délivre alors un signal correspondant à l'ensemble des ondes mécaniques détectées et qui est transmis au système 40 de traitement.

Le système 40 de traitement génère alors un premier signal intercorrélé résultant d'une première étape d'interférométrie à partir des signaux délivrés par les capteurs de la première paire A de capteurs 1 et 2 sur une première période temporelle P1 prédéterminée. Cette étape d'interférométrie est de préférence réalisée par intercorrélation, mais tout autre méthode serait adaptée ; il s'agit ici de s'affranchir de la signature du signal émis/détecté et d'extraire la composante de propagation dudit signal. Ainsi, grâce à cette étape, le signal est décorrélé de la nature du train en tant que source de sorte qu'il sera possible d'en suivre l'évolution même si la source change. L'intercorrélation des signaux du premier capteur 1 et du deuxième capteur 2 permet donc d'obtenir un premier signal déconvolué de la signature de la source, ce signal représentant une trace simplifiée, et répétable, de la propagation des ondes mécaniques au sein du rail.

Le premier signal interféré déterminé à l'issue de l'étape de traitement permet d'extraire une ou plusieurs informations sur l'état physique de la portion 10a durant la première période temporelle P1. En particulier, le premier signal peut donner des indications sur l'état physique de la portion 10a à un instant donné qui correspond à la première période temporelle.

Une période temporelle selon l'invention correspond à une fraction de la durée totale de détection (ou encore intervalle de surveillance) des ondes mécaniques par les capteurs d'une paire de capteurs. Cette période temporelle peut être plus ou moins longue selon la qualité du signal voulue et selon la quantité et/ou l'intensité des ondes mécaniques détectées par les capteurs. La durée de détection quant à elle dépend de la nature de la surveillance. La durée d'une période temporelle est en général de quelques secondes qui permettent d'obtenir une trace simplifiée par interférométrie. En revanche, la durée pendant laquelle les capteurs détectent le signal peut être plus longue et dépendre notamment de la durée de l'intervalle de surveillance qui peut être de plusieurs heures, jours ou mois. Il est possible de ne traiter qu'une partie des ondes détectées par les capteurs.

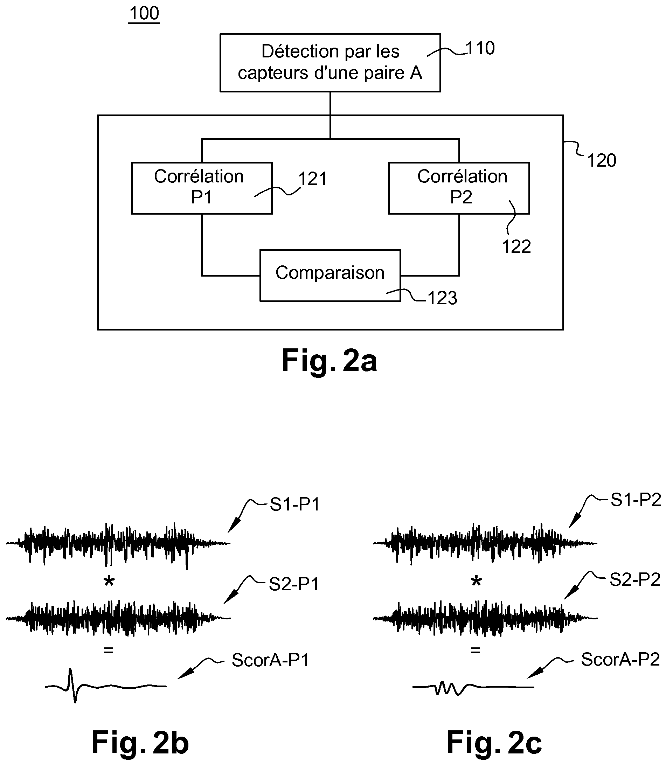

Un premier procédé 100 pouvant être mis en œuvre au moyen du système 12 est illustré sur la figure 2a. Ce premier procédé permet la surveillance de l'état physique d'une seule portion du rail 10 au cours du temps et va être décrit pour la première portion 10a.

Le procédé 100 comprend l'étape de détection 110 des ondes mécaniques se déplaçant le long du rail 10, et en particulier le long de la première portion 10a, par la première paire A de capteurs 1 et 2. Le procédé 100 comprend également l'étape de traitement 120 comportant la détermination d'une première trace simplifiée, c'est-à-dire d'un premier signal intercorrélé S_{corA-P1} résultant d'une première intercorrélation d'un signal S_{1-P1} délivré par le premier capteur 1 et d'un signal S_{2-P1} délivré par le deuxième capteur 2, sur la première période temporelle (figure 2b).

Selon le procédé 100 l'étape de traitement comprend en outre :
- la détermination d'au moins une deuxième trace simplifiée, c'est-à-dire un deuxième signal intercorrélé S_{corA-P2} résultant d'une deuxième intercorrélation de signaux S_{1-P2} et S_{2-P2} délivrés par les capteurs de la première paire A sur une deuxième période temporelle P2 prédéterminée (figure 2c) ; et
- une comparaison 123 du premier signal intercorrélé S_{corA-P1} et du deuxième signal intercorrélé S_{corA-P2} de manière à obtenir au moins une information sur l'état physique de la première portion 10a.

Selon ce procédé, le système 40 de traitement est configuré pour déterminer le premier signal intercorrélé S_{corA-P1} et le deuxième signal intercorrélé S_{corA-P2} et pour effectuer une comparaison du premier signal intercorrélé S_{corA-P1} et du deuxième signal intercorrélé S_{corA-P2} de manière à extraire au moins une information sur l'état physique de la première portion 10a.

La comparaison du premier signal intercorrélé S_{corA-P1} et du deuxième signal intercorrélé S_{corA-P2} réalisée par le système 40 de traitement permet notamment d'évaluer la variation de l'état physique de la première portion 10a entre la première période temporelle P1 et la deuxième période temporelle P2. Cette comparaison peut se faire de façon visuelle, ou automatiquement par toute méthode connue, comme un calcul de corrélation.

Dans le cas où les deux signaux sont identiques à l'issue de cette comparaison, le procédé 100 permet de conclure que l'état physique de la première portion 10a n'a pas varié entre la période P1 et la période P2. En revanche, dans le cas où les deux signaux ne sont pas identiques, le procédé 100 permet de savoir que l'état physique de la première portion 10a a varié entre la première période P1 et la deuxième période P2. Il est alors possible de relier cette variation de signal avec des variations de certains paramètres entre les périodes P1 et P2 comme par exemple une différence de conditions climatiques ou une longue période de temps écoulé qui peut indiquer une usure du rail le long de cette portion.

La durée et le moment de la journée (ou de la semaine, du mois...) des périodes temporelles P1 et P2 peuvent être choisis selon l'information que l'on veut obtenir sur l'état physique de la première portion 10a du rail 10. Si l'on veut connaitre, par exemple, la variation de l'état physique du rail au cours d'une journée en fonction de l'ensoleillement, de la température, de l'humidité..., chacune des périodes P1 et P2 peut aller de plusieurs minutes à une ou deux heures.

Selon un mode de réalisation, les capteurs 1 et 2 de la première paire A peuvent enregistrer les ondes mécaniques se déplaçant le long du rail de façon continue, ou échantillonnées à fréquence constante, durant une phase d'enregistrement prédéterminée et les périodes temporelles P1 er P2 sont sélectionnées dans cette phase d'enregistrement. Autrement dit, les phases P1 et P2 constituent chacune une fraction temporelle de la phase d'enregistrement. Selon cette première variante associée notamment à l'utilisation de la technologie DAS 17 associé à la fibre optique 15 comme réseau 14 de capteurs, la phase d'enregistrement peut avoir une durée allant de plusieurs secondes à plusieurs années.

Selon un autre mode de réalisation, les capteurs 1 et 2 de la première paire A peuvent enregistrer les ondes mécaniques se déplaçant le long du rail uniquement durant les périodes P1 et P2 prédéterminées.

Les périodes P1 et P2 peuvent être espacées d'une durée pouvant aller de quelques secondes à quelques mois ou elles peuvent au contraire se suivre sans interruption.

Le premier procédé 100 est de préférence réitéré de façon à obtenir une surveillance continue de l'état du rail et il peut donc être répété un nombre de fois illimité.

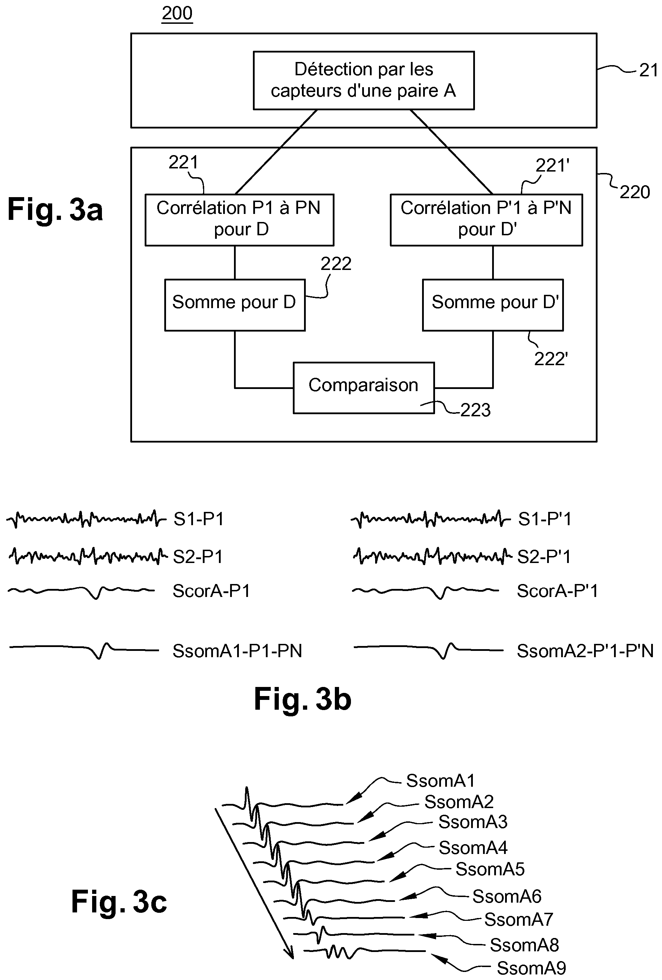

Un deuxième procédé 200 illustré sur la figure 3a peut également être mise en œuvre au moyen du système 12 de surveillance.

Le deuxième procédé 200 permet de réaliser la surveillance du rail 10, et en particulier d'étudier la variation de son état physique pour plusieurs durées comprenant chacune une pluralité de périodes temporelle. Ce procédé selon l'invention peut permettre par exemple de réaliser la surveillance d'une portion de rail jour après jour.

Le deuxième procédé 200 comprend l'étape de détection 210 des ondes mécaniques se déplaçant le long du rail 10 lesdites ondes étant générées par un train ou autre motrice en mouvement sur ledit rail par la première paire A de capteurs 1 et 2. De préférence, la détection est réalisée juste avant le passage du train directement sur la première portion 10a afin d'éviter la saturation de la paire de capteurs A, par exemple quelques dizaines de secondes avant que le train n'arrive sur la première portion. Le deuxième procédé 200 comprend également l'étape de traitement 220 comportant :
- la détermination 221 d'une pluralité de signaux intercorrélés S_{corA-P1-PN} correspondant à une intercorrélation de signaux délivrés par les capteurs de la première paire A sur une pluralité de périodes temporelles (de durées identiques ou non, par exemple 1 seconde, avant le passage de trains), l'ensemble des périodes temporelles formant un intervalle de suivi de durée D. Le système de traitement 40 comporte ainsi une mémoire de stockage d'enregistrements successifs de traces simplifiées.

L'étape de traitement comporte également la somme 222 des traces simplifiées, éventuellement normées, afin d'obtenir une trace virtuelle S_{somA1-P1-PN} pour l'intervalle de surveillance.

Le deuxième procédé de surveillance comprend la réitération de ce traitement pour d'autres intervalles de surveillance, de durées identiques ou non, les traces simplifiées étant obtenues sur des critères identiques ou non.

En particulier, l'étape de traitement 220 comporte la détermination 221' d'une deuxième pluralité de signaux intercorrélés S_{corA-P'1-P'N} correspondant à une corrélation de signaux délivrés par les capteurs de la première paire A sur une deuxième pluralité de périodes temporelles, ainsi que la somme 222' des signaux de la deuxième pluralité de signaux intercorrélés S_{corA-P'1-P'N} permettant d'obtenir une deuxième trace virtuelle S_{somA2-P'1-'PN} pour le deuxième intervalle de surveillance, de durée D' (figure 3b).

L'étape de traitement 220 comprend alors une étape de comparaison 223 permettant de comparer la première et la deuxième traces virtuelles l'une à l'autre.

Selon un exemple d'application du procédé 200 illustré sur la figure 3c, le procédé est effectué pour neuf intervalles de surveillance permettant d'obtenir les neuf traces virtuelles S_{som-A1} à S_{som-A9} qui peuvent être comparées les unes aux autres pour connaitre l'évolution de l'état du rail 10. En particulier, la comparaison des traces virtuelles S_{som-A1} à S_{som-A9} permet d'identifier que le signal varie au cours des intervalles de surveillance 1 à 9, et donc que l'état physique du rail a été modifié au cours de ces intervalles de surveillance. On note ainsi un début d'usure au niveau de la trace virtuelle S_{som-A7}, cette usure se poursuivant par la suite. Selon un mode de réalisation possible, le procédé peut comprendre une étape d'alarme permettant d'alerter si le signal, ou la différence entre le signal et la moyenne « normale », dépasse un certain seuil.

Dans cet exemple de réalisation, chaque intervalle de surveillance dure 1 mois et le procédé permet donc d'étudier la variation de l'état physique du rail 10 durant 9 mois. La modification des traces virtuelles S_{som-A1} à S_{som-A9} de façon continue au cours des 9 mois visible sur la figure 3c peut par exemple signifier que le rail 10 s'est usé au fil du temps sur la portion 10a. Selon un autre exemple de réalisation, chaque intervalle de surveillance peut durer 1 heure et le procédé peut ainsi permettre d'étudier la variation de l'état physique du rail pendant 9 heures. Dans le cas où les intervalles de surveillance vont de 5h du matin à 14h dans une période de fortes chaleurs, la variation de l'état physique du rail peut signifier que le rail s'est dilaté sous l'effet de la chaleur. Par ailleurs, dans le cas où le lendemain, le signal montre la même variation temporelle ou poursuit une détérioration continue, il est possible de considérer le changement comme « normal » ou de générer une alarme.

Selon ce deuxième procédé 200, une période temporelle P peut par exemple correspondre au passage d'un train sur le rail 10 et chaque intervalle de surveillance peut être d'une journée. Ainsi, à la fin d'une journée, on obtient une première trace virtuelle S_{SomA1-P1-PN}, dont la qualité est améliorée par rapport au signal intercorrélé obtenu à chaque passage de train et le procédé peut permettre de réaliser une surveillance journalière dans le cas où l'on répète le procédé sur plusieurs jours, semaines, mois... On note que les traces virtuelles peuvent comprendre un nombre différent d'occurrences (ou encore de traces simplifiées), les signaux pouvant de plus avoir été obtenus sur des périodes temporelles de durée différente. Grâce au choix selon l'invention de l'interférométrie cumulée, il est ainsi possible de simplifier la surveillance pour les opérateurs, les conditions d'enregistrement des signaux pouvant être choisies selon des paramètres inhérents à l'utilisation de l'infrastructure, ici au contexte de circulation des trains : l'opérateur de la voie ferrée fournit les horaires de passage des trains (éventuellement les moments de la journée ou de l'année qu'il considère comme représentatifs), et le traitement est réalisé pour les périodes déterminées sur cette base. Toute modification du planning de passage, qu'elle soit temporaire (aléa de circulation) ou permanente (changement de saison) peut être pris en compte directement par le système selon l'invention, en adaptant les périodes temporelles Pi pour les déterminations de traces simplifiées 221, 222.

Selon ce deuxième procédé, le système 40 de traitement est configuré pour
- effectuer la somme des signaux intercorrélés pour une durée comportant plusieurs périodes temporelles, et
- comparer la première trace virtuelle S_{SomA1-P1-PN} et la deuxième trace virtuelle S_{SomA2-P'1-P'N} de manière à extraire au moins une information sur la variation de l'état physique de la première portion 10a entre deux moments (ou durées).

Le système et le procédé peuvent bien entendu être adaptés pour réitérer les comparaisons avec plus de deux traces virtuelles comme représenté sur la figure 3c décrite précédemment.

En particulier, il est possible d'associer les passages de trains à l'enregistrement des signaux détectés par les paires de capteurs : 90 secondes avant le passage du train, les signaux détectés par les paires de capteurs sont transmis pendant une minute au système 40 de traitement. Le système 40 de traitement effectue alors une intercorrélation entre au moins une fraction des signaux de la paire de capteurs et stocke le résultat. En fin de journée, le système de traitement effectue la somme des signaux enregistrés, pour obtenir une première trace virtuelle qu'il peut normaliser, grâce à une étape de blanchiment spectral par exemple. Les traces virtuelles journalières sont ensuite comparées afin d'évaluer une modification dans l'état physique de la portion de rail.

Ce procédé est particulièrement adapté pour les capteurs de type fibre optique associée à un dispositif DAS qui enregistre de façon continue, la sommation amplifiant le signal. Par ailleurs, selon les évolutions constatées entre les traces virtuelles, il est possible de re-définir la position des capteurs équivalents pour une meilleure précision.

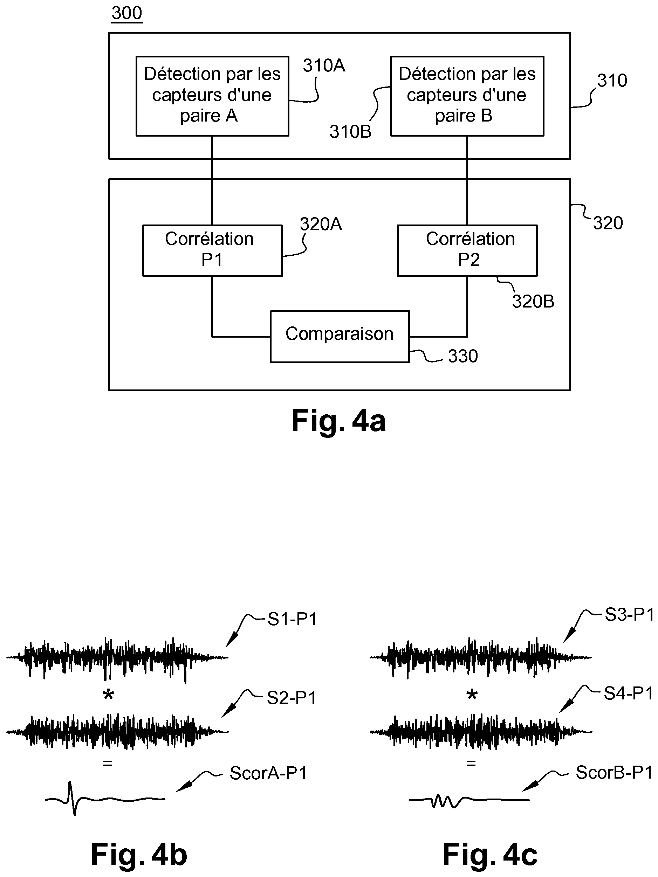

Un troisième procédé 300 illustré sur la figure 4a peut également être mis en œuvre au moyen du système 12 de surveillance.

Le troisième procédé 300 comprend l'étape de détection 310 qui comporte la détection 310_{A} des ondes mécaniques se déplaçant le long du rail 10, et en particulier le long de la première portion 10a, par la première paire A de capteurs 1 et 2. Le procédé 300 comprend également l'étape de traitement 320 comportant la détermination d'un premier signal intercorrélé S_{corA-P1} résultant d'une première intercorrélation d'un signal S_{1-P1} délivré par le premier capteur 1 et d'un signal S_{2-P1} délivré par le deuxième capteur 2, sur la première période temporelle (figure 4b).

Selon le troisième procédé 300, l'étape de détection 310 comporte en outre la détection 310_{B} des ondes mécaniques au moyen de la deuxième paire B de capteurs 3 et 4 du réseau 14. Par ailleurs, l'étape de traitement comporte en outre :
- la détermination 320_{B} d'au moins un deuxième signal intercorrélé S_{corB-P1} résultant d'une deuxième corrélation de signaux S_{3-P1} et S_{4-P1} délivrés par les capteurs de la deuxième paire B de capteurs sur la première période temporelle P1 (figure 4c), et
- une comparaison 330 du premier signal intercorrélé S_{corA-P1} et du deuxième signal intercorrélé S_{corB-P1} de manière à extraire au moins une information sur l'état physique de la première portion 10a et/ou de la deuxième portion 10b.

Selon ce troisième procédé, le système 40 de traitement est configuré pour
- déterminer au moins le deuxième signal intercorrélé S_{corB-P1}, et
- comparer le premier signal intercorrélé S_{corA-P1} et le deuxième signal intercorrélé S_{corB-P1} de manière à extraire au moins une information sur l'état physique de la première portion 10a et/ou de la deuxième portion 10b.

Dans le cas où les premier et deuxième signaux intercorrélés S_{corA-P1} et S_{corB-P1} sont différents, il est possible de conclure qu'une des deux portions est plus usée ou est plus abîmée que l'autre par les conditions, par exemple climatiques ou d'utilisation, auxquelles les deux portions sont soumises. La comparaison peut se faire de façon similaire à précédemment décrit. En revanche, dans le cas où les deux signaux sont identiques, il est possible de conclure que les deux portions présentent le même état d'usure et/ou la même évolution suite à l'exposition à des conditions particulières de température, humidité...

Ce troisième procédé a été décrit dans le cas où la première et la deuxième portions sont espacées comme c'est le cas pour les portions 10a et 10b. Cependant, ce procédé 200 peut également s'appliquer à un système dans lequel la première et la deuxième portions sont contiguës et dans lequel un des capteurs du réseau de capteur est commun à la première et à la deuxième paire. Comme illustré sur la figure 1, la première portion peut être la portion 10b et la deuxième portion peut être la portion 10c. Dans ce cas, la première et la deuxième portions ont en commun le quatrième capteur 4 qui constitue le deuxième capteur de la paire B et le premier capteur de la paire C.

Le procédé 300 n'est pas limité à deux portions de rail et peut au contraire s'appliquer à un nombre plus ou moins grand de portions. Selon un exemple de réalisation, le procédé 300 peut être appliqué au système 12 illustré sur la figure 1 et qui comprend la première portion 10a, la deuxième portion 10b et une troisième portion 10c.

Selon cet exemple de réalisation, les trois portions 10a, 10b et 10c sont identiques. La mise en œuvre du procédé 300 sur ces trois portions peut permettre d'obtenir un signal pour chacune des portions, les trois signaux pouvant alors être comparés. Par exemple, l'obtention de deux signaux identiques et d'un troisième signal différent des deux autres peut indiquer la présence d'au moins une anomalie (usure, cassure, déformation...) sur l'une des trois portions. Dans le cas où trois signaux différents sont obtenus, les trois portions ou deux des trois portions peuvent présenter une ou plusieurs anomalies.

Selon un mode de réalisation, il est possible d'effectuer la surveillance journalière décrite précédemment (selon le deuxième procédé) de manière à effectuer une surveillance de l'état physique de chacune des portions au fil des jours et également de voir si l'état physique d'une ou de plusieurs portions varie différemment des autres portions au fil des jours. Dans les différents modes de réalisation qui ont été décrits, les capteurs étaient placés uniquement le long du rail 10 de la voie 20. Cependant, les capteurs peuvent être placés sur les deux rails 10 et 10' de la voie 20, selon la même répartition ou selon une répartition différente.

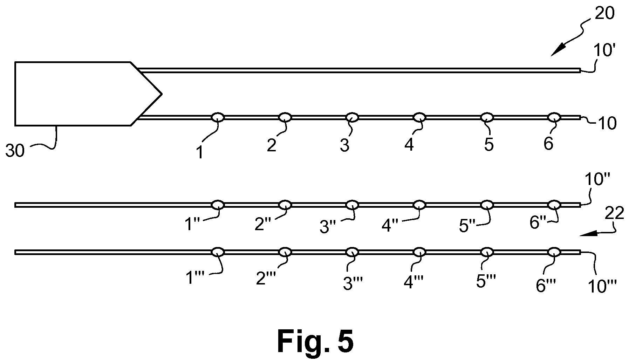

De manière additionnelle avec les modes de réalisation précédemment décrits, les ondes émises par le train 30 passant sur la voie 20 peuvent être utilisées pour effectuer la surveillance du sous-sol entre deux rails 10' et 10" d'une voie 22 qui s'étend parallèlement à la voie 20 selon la méthode décrite dans la demande de brevet WO2020/021177. Pour cela, des couples de capteurs 1"-1‴ à 5"-5"' peuvent être placés sur des rails 10" et 10"' de la voie 22 (figure 5). Lorsque le train 30 passe sur la voie 20 et en l'absence de passage de train sur la voie 22, les couples de capteurs placés sur la voie 22 permettent la surveillance du sous-sol entre le rail 10" et le rail 10"' par interférométrie. De la même manière, la surveillance du sous-sol entre les deux rails 10 et 10' de la voie 20 pourrait être réalisée en plaçant des capteurs sur le rail 10' et en utilisant les ondes émises par un train qui passerait sur la voie 22.

Cette combinaison permise par l'invention est particulièrement avantageuse d'un point de vue économique, la rentabilité de l'instrumentation des voies ferrées étant ainsi accrue. De plus, l'imagerie géophysique du sous-sol ainsi réalisée est au plus près des rails et permet une focalisation sous la voie elle-même. Ceci constitue un avantage majeur pour augmenter la résolution et positionnement de l'image.

Par ailleurs, en complément des modes de réalisation précédemment décrits, les capteurs 1 à 5 du rail 10 (ou d'une manière générales les capteurs placés sur un rail et permettant la mise en œuvre des procédés de l'invention) peuvent être en outre utilisés pour réaliser une analyse modale du rail le long duquel ils sont placés. La méthode d'analyse modale est connue de l'homme du métier et permet notamment l'étude du modèle dynamique du rail le long duquel sont placés les capteurs.

De manière additionnelle avec les modes de réalisation précédemment décrits et lorsque le réseau de capteur est formé par une fibre optique, la fibre optique peut être utilisée pour mesurer la déformation de l'élément longitudinal contre lequel elle est placée, par exemple un rail de chemin de fer. Pour cela, la fibre optique est associée à un dispositif DAS.

Selon un exemple de réalisation possible, le procédé 300 peut être réalisé pour un certain nombre de portions initiales, par exemple d'une longueur de 100 mètres. Lorsque qu'une anomalie est identifiée sur une de ces portions initiales, une analyse plus fine peut être réalisée en divisant cette portion initiale en plusieurs portions secondaires, par exemple d'une longueur de 10 mètres afin d'identifier la ou les portions secondaires responsable de l'anomalie de la portion initiale. L'instrumentation initiale de la voie peut comprendre des systèmes de capteurs « dormants » dans un premier temps ; avantageusement, c'est la programmation du dispositif DAS qui est modifiée pour permettre la segmentation plus fine. Si une surveillance continue plus détaillée est envisagée pour une portion, il est possible aussi d'ajouter des capteurs ultérieurement, au sein d'un réseau de capteurs discrets ou en combinaison avec une fibre optique installée.

Selon un mode de réalisation possible, le premier procédé 100 et le deuxième procédé 200 peuvent être combinés. Pour cela, il est possible d'effectuer le procédé de surveillance pour plusieurs périodes temporelles, et ce, pour plusieurs portions. Il est alors possible de comparer les signaux de plusieurs portions et ce pour plusieurs périodes temporelles ce qui peut permettre d'étudier la variation d'état physique de chaque portion au court du temps et de comparer aussi les portions les unes aux autres afin de détecter d'éventuelles anomalies. De même, il est possible de combiner le deuxième et le troisième procédés afin de surveiller plusieurs portions pour différents intervalles de surveillance.

Les procédés 100, 200 et 300 de l'invention, qu'ils soient pris seuls ou en combinaison, permettent ainsi d'effectuer des mesures fines de variations ténues de l'état physique d'un rail et donc de fournir un diagnostic régulier, par exemple journalier, de l'état physique d'un rail. Avantageusement, la méthode de corrélation des signaux par interférométrie permet d'extraire la composante de propagation du signal en élimination la composante due à la source. Il est alors possible de mesurer des indicateurs identifiés du signal comme la vitesse de propagation, l'amplitude, la forme de l'onde, la fréquence de résonnance...et ce, pour chaque portion surveillée. L'analyse des variations de ces indicateurs au cours de plusieurs périodes temporelles pour une portion du rail donnée et/ou pour différentes portions du rail permet l'identification d'une portion usée du rail.

Dans l'exemple de réalisation qui vient d'être décrit, l'élément longitudinal est un rail et, le ou les trains passant sur le rail sont utilisés comme source d'ondes mécaniques. Cependant, l'élément longitudinal peut être tout type d'élément longitudinal associé à une source d'ondes mécaniques comme par exemple des câbles d'un pont suspendu ou un élément de structure d'un pont pour lesquels la source d'ondes mécaniques peut être le passage des voitures sur le pont, ou un câble d'ascenseur pour lequel la source d'ondes mécaniques peut être le mouvement de l'ascenseur.

Selon d'autres modes de réalisation, l'élément longitudinal peut ne pas être associé à une source d'ondes mécaniques de par son utilisation et une source d'ondes mécaniques peut alors être ajoutée pour mettre en œuvre le procédé selon l'invention. La source peut alors être tout type de dispositif causant des chocs et/ou des vibrations sur l'élément longitudinal comme par exemple un dispositif qui taperait sur l'élément longitudinal à une fréquence régulière ou non.

## Revendications

1. Procédé (200) de surveillance de l'état physique d'un élément longitudinal (10), **caractérisé en ce qu'**il comprend :
- une étape (210) de détection des ondes mécaniques se déplaçant le long de l'élément longitudinal (10) au moyen d'un réseau (14) de capteurs d'ondes mécaniques placés le long et au contact de l'élément longitudinal, ledit réseau (14) comprenant au moins une première paire (A) de capteurs (1,2) positionnés chacun à une extrémité d'une première portion (10a) de l'élément longitudinal (10), et
- une étape (220) de traitement comprenant
• la détermination (221) d'une pluralité de traces simplifiées (S_{corAP1-Pi}), chaque trace simplifiée (S_{corAPi}) résultant de l'interférométrie de signaux (S_{1-P1},S_{2-P1}) délivrés par les capteurs de la première paire A sur une période temporelle prédéterminée (Pi), le procédé étant **caractérisé en ce que** l'étape de traitement comprend:
• la détermination (222) d'au moins une première et une deuxième traces virtuelles (S_{somA1,} S_{somA2}), la première trace virtuelle (S_{somA1}) correspondant à la somme de traces simplifiées déterminées pendant un premier intervalle de surveillance et la deuxième trace virtuelle (S_{somA2}) correspondant à la somme de traces simplifiées déterminées pendant un deuxième intervalle de surveillance, le premier et le deuxième intervalles de surveillance étant différents et comprenant chacun une pluralité de périodes temporelles prédéterminées, et
• la comparaison (223) d'au moins la première trace virtuelle (S_{somA1}) avec la deuxième trace virtuelle (S_{somA2}) de manière à extraire au moins une information sur l'état physique de la première portion (10a).

2. Procédé selon la revendication 1, caractérisé en ce l'interférométrie est une intercorrélation.

3. Procédé selon la revendication 1 ou 2, **caractérisé en ce que** le réseau (14) de capteurs comprend une fibre optique (15) associée à un dispositif de détection acoustique distribuée (DAS) (17), ladite première paire de capteurs (1,2) étant définie sur la fibre optique par le système DAS pendant l'étape (220) de traitement.

4. Procédé selon l'une quelconque des revendications précédentes, **caractérisé en ce que** la détermination des traces virtuelles comprend une étape de normalisation.

5. Procédé selon la revendication 4, **caractérisé en ce que** l'étape de normalisation est réalisée par blanchiment spectral.

6. Procédé selon l'une quelconque des revendications précédentes, **caractérisé en ce que** la détection des ondes mécanique est réalisée de façon continue.

7. Procédé selon l'une quelconque des revendications précédentes, **caractérisé en ce qu'**il est réalisé pour une pluralité de paires de capteurs.

8. Procédé selon l'une quelconque des revendications précédentes, **caractérisé en ce que** les intervalles de surveillance sont de durée identique, notamment égaux à une journée.

9. Procédé selon l'une quelconque des revendications précédentes, **caractérisé en ce que** l'élément longitudinal (10) est un rail d'une voie de chemin de fer, les ondes mécaniques détectées correspondant à un passage de train sur ledit rail.

10. Procédé selon la revendication 9, **caractérisé en ce que** chaque période temporelle correspond à un passage de train sur le rail, la détection étant réalisée avant que le train n'arrive sur la première portion.

11. Système (12) de surveillance de l'état physique d'un élément longitudinal (10), **caractérisé en ce qu'**il comprend :
- un réseau (12) de capteurs d'ondes mécaniques placés le long et au contact de l'élément longitudinal, ledit réseau (12) comprenant au moins une première paire (A) de capteurs positionnés chacun à une extrémité d'une première portion (10a) de l'élément longitudinal (10), et
- un système (40) de traitement des signaux issus des capteurs dudit réseau (12) de capteurs, le système (40) de traitement étant configuré pour
• déterminer une pluralité de traces simplifiées (S_{corAP1-Pi}) en faisant l'interférométrie de signaux (S_{1-P1},S_{2-P1}) délivrés par les capteurs (1, 2) de la première paire (A) de capteurs sur une période temporelle (Pi) prédéterminée, **caractérisé en ce que** le système de traitement est configuré pour
• calculer au moins une première et une deuxième traces virtuelles (S_{somA1}, S_{somA2}), la première trace virtuelle (S_{somA1}) correspondant à la somme de traces simplifiées déterminées pendant un premier intervalle de surveillance et la deuxième trace virtuelle (S_{somA2}) correspondant à la somme de traces simplifiées déterminées pendant un deuxième intervalle de surveillance, le premier et le deuxième intervalles de surveillance étant différents et comprenant chacun une pluralité de période temporelles prédéterminées, et
• comparer au moins la première et la deuxième traces virtuelles de manière à extraire au moins une information sur l'état physique de la première portion (10a).

12. Système selon la revendication 11, **caractérisé en ce qu'**au moins un capteur du réseau (12) de capteurs est un géophone ou un accéléromètre.

13. Système selon l'une quelconque des revendications 11 ou 12, **caractérisé en ce que** le réseau (12) de capteurs est réalisé au moins partiellement par une fibre optique associée à un dispositif de détection acoustique distribuée (DAS).

14. Système selon l'une quelconque des revendications 11 à 13, **caractérisé en ce que** le système comprend une source d'ondes mécaniques configurée pour générer les ondes mécaniques détectées par le réseau (12) de capteurs.

15. Système selon l'une quelconque des revendications 11 à 14, **caractérisé en ce que** l'élément longitudinal (10) est un rail d'une voie de chemin de fer, et **en ce que** le réseau (12) de capteurs est apte à détecter les ondes mécaniques générées par le passage d'au moins un train sur la voie.

## Patentansprüche

1. Verfahren (200) zur Überwachung des physikalischen Zustands eines Längselements (10), **dadurch gekennzeichnet, dass** es Folgendes aufweist:
- einen Schritt (210) zum Erfassen mechanischer Wellen, die sich entlang des Längselements (10) bewegen, mithilfe eines Netzes (14) von Sensoren für mechanische Wellen, die entlang des Längselements und in Kontakt mit diesem angeordnet sind, wobei das Netz (14) mindestens ein erstes Paar (A) von Sensoren (1, 2) aufweist, die jeweils an einem Ende eines ersten Abschnitts (10a) des Längselements (10) positioniert sind, und
- einen Schritt (220) zum Verarbeiten, der Folgendes aufweist:
• Bestimmen (221) einer Vielzahl von vereinfachten Spuren (S_{corAP1-Pi}), wobei sich jede vereinfachte Spur (S_{Corapi}) aus der Interferometrie von Signalen (S_{1-P1}, S_{2-P1}) ergibt, die von den Sensoren des ersten Paars A über einen vorbestimmten Zeitraum (Pi) geliefert werden, wobei das Verfahren **dadurch gekennzeichnet ist, dass** der Schritt zum Verarbeiten Folgendes aufweist:
• Bestimmen (222) von mindestens einer ersten und einer zweiten virtuellen Spur (S_{somA1}, S_{somA2}), wobei die erste virtuelle Spur (S_{somA1}) der Summe von vereinfachten Spuren entspricht, die während eines ersten Überwachungsintervalls bestimmt wurden, und die zweite virtuelle Spur (S_{somA2}) der Summe von vereinfachten Spuren entspricht, die während eines zweiten Überwachungsintervalls bestimmt wurden, wobei das erste und das zweite Überwachungsintervall unterschiedlich sind und jeweils eine Vielzahl von vorbestimmten Zeiträumen aufweisen, und
• Vergleichen (223) mindestens der ersten virtuellen Spur (S_{somA1}) mit der zweiten virtuellen Spur (S_{somA2}), um so mindestens eine Information über den physikalischen Zustand des ersten Abschnitts (10a) zu extrahieren.

2. Verfahren nach Anspruch 1, **dadurch gekennzeichnet, dass** die Interferometrie eine Interkorrelation ist.

3. Verfahren nach Anspruch 1 oder 2, **dadurch gekennzeichnet, dass** das Netz (14) von Sensoren eine Glasfaser (15) aufweist, die einer verteilten akustischen Erfassungsvorrichtung (DAS) (17) zugeordnet ist, wobei das erste Paar von Sensoren (1, 2) während des Schritts zum Verarbeiten (220) durch das DAS-System auf der Glasfaser definiert wird.

4. Verfahren nach einem der vorhergehenden Ansprüche, **dadurch gekennzeichnet, dass** das Bestimmen der virtuellen Spuren einen Normalisierungsschritt aufweist.

5. Verfahren nach Anspruch 4, **dadurch gekennzeichnet, dass** der Normalisierungsschritt durch spektrale Bleichung durchgeführt wird.

6. Verfahren nach einem der vorhergehenden Ansprüche, **dadurch gekennzeichnet, dass** die Erfassung der mechanischen Wellen kontinuierlich durchgeführt wird.

7. Verfahren nach einem der vorhergehenden Ansprüche, **dadurch gekennzeichnet, dass** es für eine Vielzahl von Sensorpaaren durchgeführt wird.

8. Verfahren nach einem der vorangehenden Ansprüche, **dadurch gekennzeichnet, dass** die Überwachungsintervalle von identischer Dauer sind, insbesondere gleich einem Tag.

9. Verfahren nach einem der vorangehenden Ansprüche, **dadurch gekennzeichnet, dass** das Längselement (10) eine Schiene eines Eisenbahngleises ist, wobei die erfassten mechanischen Wellen einem Vorbeifahren eines Zuges auf der Schiene entsprechen.

10. Verfahren nach Anspruch 9, **dadurch gekennzeichnet, dass** jeder Zeitraum einem Vorbeifahren eines Zuges auf der Schiene entspricht, wobei die Erfassung erfolgt, bevor der Zug auf dem ersten Abschnitt ankommt.

11. System (12) zur Überwachung des physikalischen Zustands eines Längselements (10), **dadurch gekennzeichnet, dass** es Folgendes aufweist:
- ein Netz (12) von Sensoren für mechanische Wellen, die entlang des Längselements und in Kontakt mit diesem angeordnet sind, wobei das Netz (12) mindestens ein erstes Paar (A) von Sensoren aufweist, die jeweils an einem Ende eines ersten Abschnitts (10a) des Längselements (10) positioniert sind, und
- ein System (40) zur Verarbeitung von Signalen, die von den Sensoren des Netzes (12) von Sensoren stammen, wobei das Verarbeitungssystem (40) konfiguriert ist, um
• eine Vielzahl von vereinfachten Spuren (S_{corAP1-Pi}) durch Interferometrie von Signalen (S_{1-P1}, S_{2-P1}) zu bestimmen, die von den Sensoren (1, 2) des ersten Paars (A) von Sensoren über einen vorbestimmten Zeitraum (Pi) ausgegeben werden, **dadurch gekennzeichnet, dass** das Verarbeitungssystem konfiguriert ist, um
• mindestens eine erste und eine zweite virtuelle Spur (S_{somA1}, S_{somA2}) zu berechnen, wobei die erste virtuelle Spur (S_{somA1}) der Summe von vereinfachten Spuren entspricht, die während eines ersten Überwachungsintervalls bestimmt wurden, und die zweite virtuelle Spur (S_{somA2}) der Summe von vereinfachten Spuren entspricht, die während eines zweiten Überwachungsintervalls bestimmt wurden, wobei das erste und das zweite Überwachungsintervall unterschiedlich sind und jeweils eine Vielzahl von vorbestimmten Zeiträumen aufweisen, und
• mindestens die erste virtuelle Spur mit der zweiten virtuellen Spur zu vergleichen, um so mindestens eine Information über den physikalischen Zustand des ersten Abschnitts (10a) zu extrahieren.

12. System nach Anspruch 11, **dadurch gekennzeichnet, dass** mindestens ein Sensor des Netzes (12) von Sensoren ein Geophon oder ein Beschleunigungsmesser ist.

13. System nach einem der Ansprüche 11 oder 12, **dadurch gekennzeichnet, dass** das Netz (12) von Sensoren zumindest teilweise durch eine Glasfaser realisiert wird, die einer verteilten akustischen Erfassungsvorrichtung (DAS) zugeordnet ist.

14. System nach einem der Ansprüche 11 bis 13, **dadurch gekennzeichnet, dass** das System eine Quelle für mechanische Wellen aufweist, die so konfiguriert ist, dass sie die mechanischen Wellen erzeugt, die von dem Netz (12) von Sensoren erfasst werden.

15. System nach einem der Ansprüche 11 bis 14, **dadurch gekennzeichnet, dass** das Längselement (10) eine Schiene eines Eisenbahngleises ist und dass das Netz (12) von Sensoren geeignet ist, die mechanischen Wellen zu erfassen, die durch das Vorbeifahren mindestens eines Zuges auf dem Gleis erzeugt werden.

## Claims

1. Method (200) for monitoring the physical state of a longitudinal element (10), **characterized in that** it comprises:
- a step (210) of detection of the mechanical waves moving along the longitudinal element (10) by means of an array (14) of mechanical wave sensors placed along and in contact with the longitudinal element, said array (14) comprising at least a first pair (A) of sensors (1, 2) each positioned at one end of a first portion (10a) of the longitudinal element (10), and
- a processing step (220) comprising
• determining (221) a plurality of simplified traces (S_{corAP1-Pi}), each simplified trace (S_{corAPi}) resulting from the interferometry of signals (S_{1-P1}, S_{2-P1}) delivered by the sensors of the first pair A over a predetermined time period (Pi), the method being **characterized in that** the processing step comprises:
• determining (222) at least a first virtual trace and a second virtual trace (S_{somA1}, S_{somA2}), the first virtual trace (S_{somA1}) corresponding to the sum of simplified traces determined during a first monitoring interval and the second virtual trace (S_{somA2}) corresponding to the sum of simplified traces determined during a second monitoring interval, the first and the second monitoring intervals being different and each comprising a plurality of predetermined time periods, and
• comparing (223) at least the first virtual trace (S_{somA1}) with the second virtual trace (S_{somA2}) in such a way as to extract at least one piece of information on the physical state of the first portion (10a).

2. Method according to Claim 1, **characterized in that** the interferometry consists of cross-correlation.

3. Method according to Claim 1 or 2, **characterized in that** the array (14) of sensors comprises an optical fibre (15) associated with a distributed acoustic sensing (DAS) device (17), said first pair of sensors (1, 2) being defined on the optical fibre by the DAS system during the processing step (220).

4. Method according to any one of the preceding claims, **characterized in that** the determination of the virtual traces comprises a normalization step.

5. Method according to Claim 4, **characterized in that** the normalization step is carried out by spectral whitening.

6. Method according to any one of the preceding claims, **characterized in that** the detection of the mechanical waves is carried out continuously.

7. Method according to any one of the preceding claims, **characterized in that** it is carried out for a plurality of pairs of sensors.

8. Method according to any one of the preceding claims, **characterized in that** the monitoring intervals are of identical duration, in particular equal to one day.

9. Method according to any one of the preceding claims, **characterized in that** the longitudinal element (10) is a rail of a railroad track, the mechanical waves detected corresponding to the passage of a train over said rail.

10. Method according to Claim 9, **characterized in that** each time period corresponds to the passage of a train over the rail, detection being carried out before the train arrives at the first portion.

11. System (12) for monitoring the physical state of a longitudinal element (10), **characterized in that** it comprises:
- an array (12) of mechanical wave sensors placed along and in contact with the longitudinal element, said array (12) comprising at least a first pair (A) of sensors each positioned at one end of a first portion (10a) of the longitudinal element (10), and
- a system (40) for processing the signals from the sensors of said array (12) of sensors, the processing system (40) being configured to
• determine a plurality of simplified traces (S_{corAP1}-_{Pi}) by interferometry of signals (S_{1-P1}, S_{2-P1}) delivered by the sensors (1, 2) of the first pair (A) of sensors over a predetermined time period (Pi), **characterized in that** the processing system is configured to
• calculate at least a first virtual trace and a second virtual trace (S_{somA1}, S_{somA2}), the first virtual trace (S_{somA1}) corresponding to the sum of simplified traces determined during a first monitoring interval and the second virtual trace (S_{somA2}) corresponding to the sum of simplified traces determined during a second monitoring interval, the first and the second monitoring intervals being different and each comprising a plurality of predetermined time periods, and
• compare at least the first and the second virtual traces in such a way as to extract at least one piece of information on the physical state of the first portion (10a) .

12. System according to Claim 11, **characterized in that** at least one sensor of the array (12) of sensors is a geophone or an accelerometer.

13. System according to either of Claims 11 or 12, **characterized in that** the array (12) of sensors is produced at least partially using an optical fibre associated with a distributed acoustic sensing (DAS) device.

14. System according to any one of Claims 11 to 13, **characterized in that** the system comprises a source of mechanical waves configured to generate the mechanical waves detected by the array (12) of sensors.

15. System according to any one of Claims 11 to 14, **characterized in that** the longitudinal element (10) is a rail of a railroad track, and **in that** the array (12) of sensors is capable of detecting the mechanical waves generated by the passage of at least one train over the track.
